(19) Europäisches Patentamt
European Patent Office
Office européen des brevets

(11) **EP 0 640 778 B1**

(12) **EUROPEAN PATENT SPECIFICATION**

(45) Date of publication and mention
of the grant of the patent:
**29.10.1997 Bulletin 1997/44**

(51) Int Cl.⁶: **F16H 49/00**, F16H 55/08

(21) Application number: **94306369.3**

(22) Date of filing: **30.08.1994**

(54) **Harmonic drive gearing apparatus, and a method of generating tooth profiles therefor**

Spannungswellengetriebe und Verfahren zur Erzeugung seines Zahnprofils

Transmission harmonique et méthode pour générer son profil denté

(84) Designated Contracting States:
**DE FR GB IT SE**

(30) Priority: **30.08.1993 US 113285**

(43) Date of publication of application:
**01.03.1995 Bulletin 1995/09**

(73) Proprietor: **TEIJIN SEIKI BOSTON, INC.**
**Peabody, Massachusetts 01960 (US)**

(72) Inventor: **Aubin, Joseph J.**
**Georgetown, Massachusetts 01833 (US)**

(74) Representative: **Warren, Anthony Robert et al**
**BARON & WARREN,**
**18 South End,**
**Kensington**
**London W8 5BU (GB)**

(56) References cited:
**EP-A- 0 309 197        EP-A- 0 501 522**
**DE-A- 2 203 233**

- **KONSTRUKTION, vol.42, no.7/8, 1990, BERLIN DE pages 255 - 260, XP000195082 F. LEISTNER 'getriebe für hohe Übersetzungen'**
- **KONSTRUKTION, vol.43, no.7/8, 1991, BERLIN DE pages 275 - 280 S. MOTYKA 'Zahnradgetriebe, Wälzgetriebe'**

## Description

This invention relates to harmonic drive or strain wave gearing, and more particularly to improved tooth profiles of a flexspline (a flexible circular spline or ring gear) and a rigid circular spline or ring gear in harmonic drive devices.

The original harmonic drive strain wave gearing was introduced by Musser in U.S. Patent 2,906,143. A harmonic drive strain wave gear comprises a rigid circular spline having "n" teeth, a flexspline having fewer than "n" teeth ("n" being a positive integer) and being disposed in the circular spline, and a rotatable wave generator disposed in the flexspline to deform the flexspline into a lobed configuration, such as an oval shape, so as to force the flexspline into engagement with the circular spline at two points of the major axis of the formed ovaloid. The wave generator may include an oval camplate and a bearing snugly mounted on the outer periphery of the camplate. The outer bearing is matingly inserted into the flexspline so as to deform it to the peripheral contour of the camplate. An input shaft attached to the camplate provides rotation thereof, causing the ovaloid configuration of the flexspline to be correspondingly rotated. During such rotation, the circular spline is induced to rotate relative to the flexspline an amount proportional to the difference in the number of teeth between the flexspline and the circular spline. When an output shaft is arranged on either the flexspline or the circular spline, that output shaft is rotated very slowly in comparison to the input shaft and camplate. Such harmonic drive strain wave gearing has been utilized in machinery requiring a high reduction ratio.

An improvement in tooth design was made by Ishikawa, as shown in U.S. Patent 3,415,143, wherein tooth engagement between the flexspline and the circular spline was deviated so that one face only of a flexspline tooth engages a circular spline tooth.

Further improvements in harmonic drive tooth profiles appeared in U.S. Patent 3,996,816 to Brighton who designed a modified involute configuration with a small contact angle.

A more recent attempt at a tooth profile redesign is shown in U.S. Patent 4,823,638 to Ishikawa, wherein a tooth profile of the engaging splines is defined by a transformation of an original curve by the application of a reduced 1/2 scale to a corresponding similar figure, that is, a mapping curve derived by a similarity transformation from the movement locus of the crest of the flexspline relative to the circular spline.

This design, as well as the other aforementioned gear tooth configurations, are based on a simplified traditional development which assumes that the teeth are located on a generally straight rack.

In fact, the gear teeth are not located on a simple rack. The circular spline teeth are located on a circle, so that the centrelines of these teeth are disposed radially relative to the axis of the circular spline, which is also coaxial with the rotational axis of the wave generator. However, the flexspline teeth are located generally on an oval or ellipse formed by flexure of the flexspline by the wave generator. As a result, the centrelines of the flexspline teeth precess or deviate from the radial by varying angles depending upon the positions of the teeth relative to the major and minor axes of the oval. This causes an inclination angle change between a tooth on the flexspline and the circular spline as the tooth moves into engagement when the wave generator wipes past that tooth from the minor axis to the major axis of the oval. No such inclination angle occurs when it is assumed that the circular spline and the flexspline are straight racks, and the variation is not equivalent to the changes in angular inclination between the teeth of two conventional rigid circular intermeshing gears.

There is no appreciation, in any of the foregoing prior art, of such variations in tooth inclination as the flexspline is distorted by the wave generator wiping therepast. The fact that flexspline tooth inclination processes or deviates as just mentioned, and is a maximum at an angle of 45 degrees in front of, and behind, each lobe (major axis) of an oval wave generator, is given no consideration in the prior art.

It is an object of the present invention to provide a tooth profile for extended contact flexspline and circular spline gear tooth configuration which takes into account such tooth inclination to avoid interference therebetween.

It is a further object of the present invention to provide a tooth profile which is capable of permitting more tooth contact between the flexspline and the circular spline, to yield higher torsional stiffness characteristics of the assembly.

The article "Getriebe für hohe Übersetzungen", pages 255-260, Konstruktion (DE) Springer - Verlag, vol. 42, 1990, Berlin, refers to the above-mentioned problem of interference due to tooth inclination in harmonic drive gearing, and states that a computer program has been developed for modifying the tooth profiles so as to overcome the problem. However, no explanation is given which would enable a reader to develop the modified tooth profiles.

The article "Zahnradgetriebe, Wälzgetriebe", pages 275-280, Konstruktion (DE) Springer-Verlag, vol. 43, 1991, Berlin, refers to the latter article, and defines essentially the same equations as taught by the previously discussed Ishikaiwa US Patent 4,823,638, but does not explain how tooth profiles modified to take into account the above-mentioned interference problem may be developed.

According to one aspect of this invention, there is provided a harmonic drive assembly, of the general type disclosed in the above-mentioned "Getriebe für hohe Übersetzungen" article, and as defined in the preamble of claim 1.

According to this aspect, there is provided a harmonic drive assembly as defined in the characterising clause of claim 1.

The invention also includes a method of generating a tooth profile for an extended contact harmonic drive assembly, of the general type disclosed in the said "Getriebe für hohe Übersetzungen" article, and as defined in the preamble of claim 3.

According to this aspect, there is provided a method as defined in the characterising clause of claim 3.

Reference will now be made to the following drawings, in which:

Figure 1 is a front partial view of a harmonic drive gearing assembly constructed according to the principles of the present invention;

Figure 2 is a view of a quadrant of the teeth of a flexspline and a circular spline shown in Figure 1, showing the progressive points of tooth engagement therebetween;

Figure 3a is a frontal enlarged view of a flexspline tooth engaging a pair of teeth of the circular spline, showing the interference typical of the prior art;

Figure 3b is a view similar to Figure 3a, showing the tooth engagement of the present invention ;

Figure 3c illustrates, schematically, the variations in inclination of the flexspline teeth due to distortion of the flexspline; and

Figure 4 is a comparison of the tooth profile of the present invention with that of the prior art.

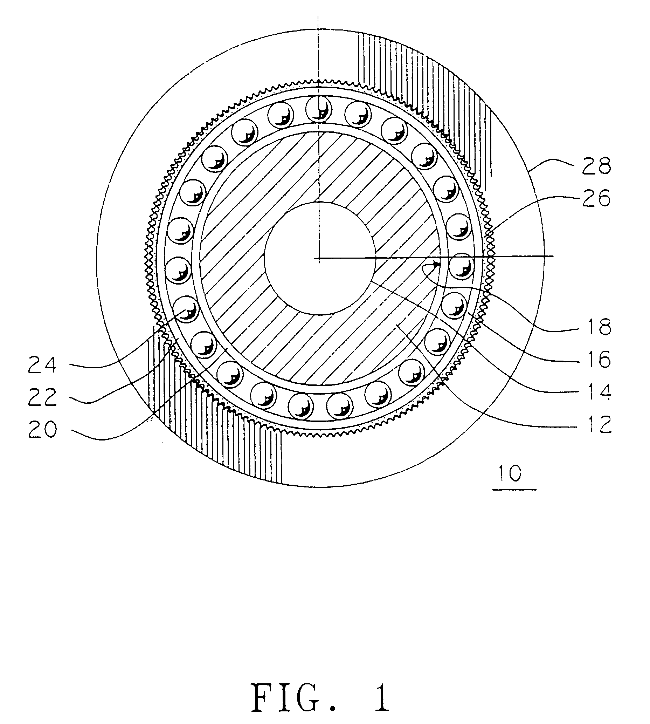

Referring to the drawings, and particularly to Figure 1, there is shown in an enlarged frontal view, a harmonic drive gearing assembly 10, having a tooth profile which embodies the present invention.

The harmonic drive gearing assembly 10 comprises a planar generally oval shaped wave generator (cam plate) 12 having a bore 14 for attachment to a drive shaft, not shown.

The wave generator 12 has an outer periphery 18 with a bearing assembly 16 pressed thereabout. The bearing assembly 16 consists of an inner race 20, an outer race 22, and a plurality of roller members 24 rotatively distributed therebetween. A deformable flexspline 26 is disposed outwardly of and snugly engaged with the outer race 22 of the bearing assembly 16. A rigid circular spline 28 is disposed radially outwardly of the deformable flexspline 26. An array of gear teeth 30 is arranged on the outer periphery of the flexspline 26, and another array of gear teeth 32 is arranged on the inner periphery of the circular spline 28 in a matable relationship with the flexspline teeth.

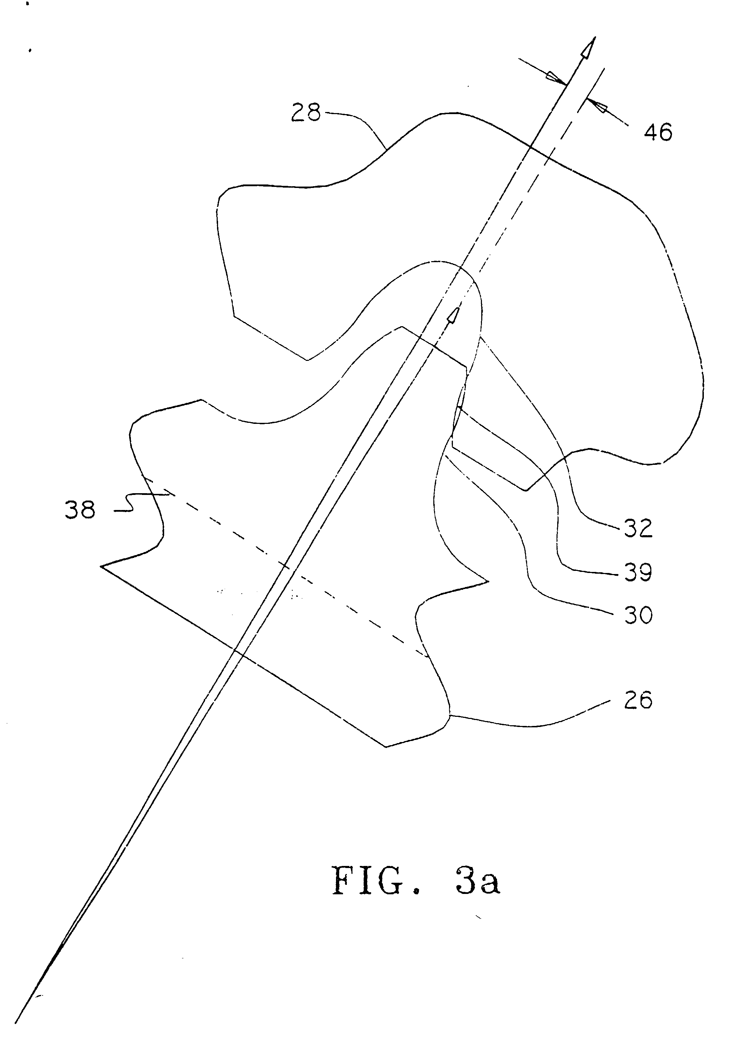

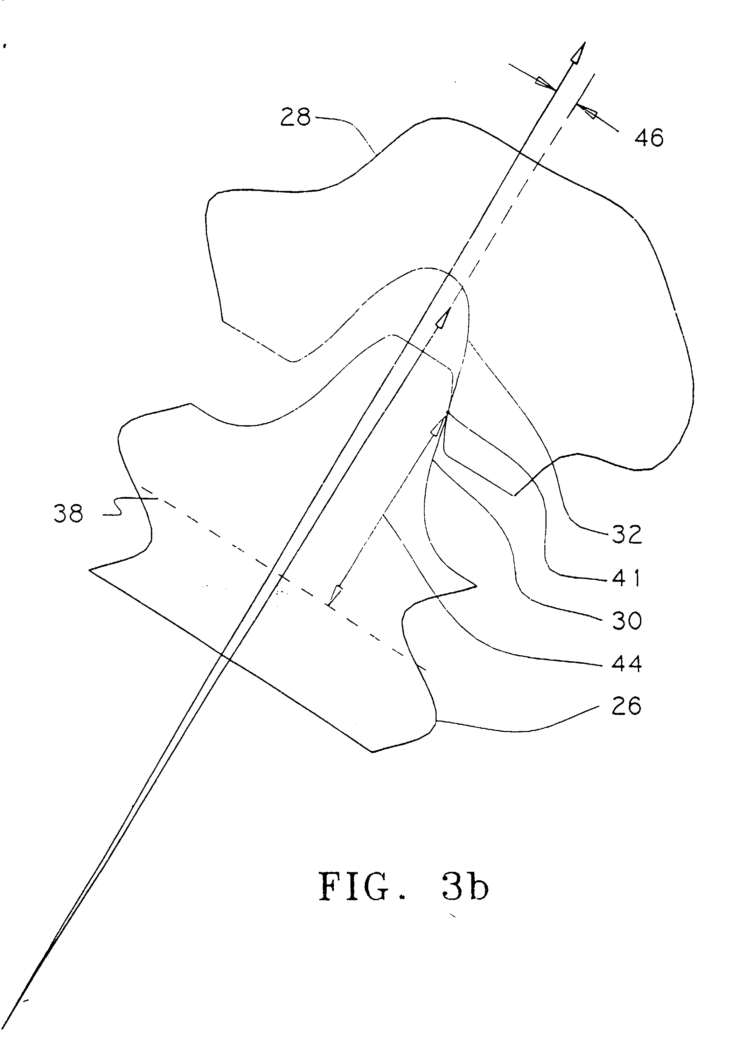

Tooth inclination consideration of the present invention, is depicted in Figures 3a and 3b, in an enlarged representation. The present invention as shown in Figure 3b, critically includes allowance for changes in flexspline tooth inclination in determination of the tooth profile.

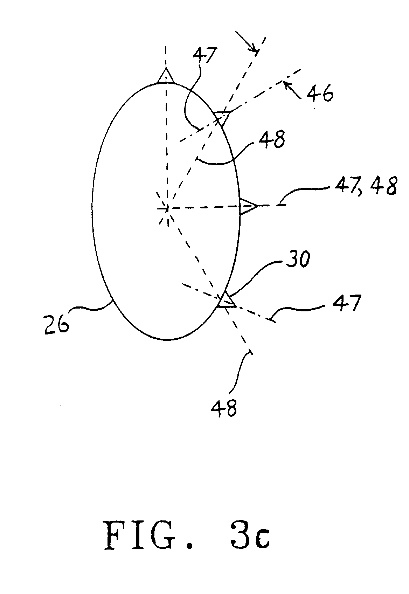

This flexspline tooth inclination is also illustrated schematically in Figure 3c, as applied to a flexspline having a greatly exaggerated degree of ovality, to highlight the problem involved.

The changes in inclination (46) between the centre-line or axis of symmetry 47 of a flexspline tooth 30 and a line 48 radial to the common axis of the wave generator and circular spline (and changes in inclination between the centrelines of adjacent teeth), occur progressively and cyclically when the lobe (which defines the major axis of the wave generator 12) of the wave generator 12 rotates within and adjacent the flexspline 26, to give the flexspline 26 a corresponding rotating oval shape, having a minor axis and a major axis, with teeth on the radially outer side thereof. Thus, the "normal" or centreline 47 of each tooth 30 precesses, and is canted or inclined, relative to the radial line 48 centered on the rotational axis of the wave generator during the sweep of the major and minor axes of the wave generator (cam plate) 12 therewithin. At the major axis of the wave generator 12, the inclination of the teeth at the corresponding location on the flexspline 26 relative to said radial line is zero, and likewise the inclination of the teeth at a location on the flexspline 26 corresponding to the minor axis will also be zero.

All intermediate flexspline teeth are progressively more inclined, reaching maximum inclination (cant) relative to said radial line at a location between the major and minor axis.

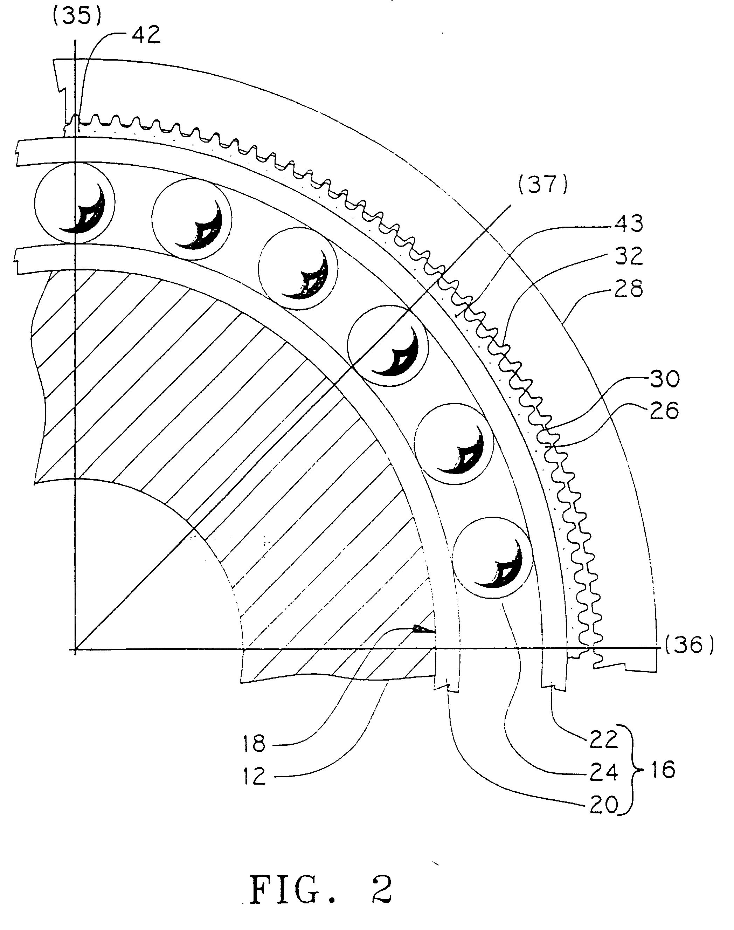

The major axis of the cam plate 12 and the flexspline 26 is represented, in Figure 2, at the 12 o'clock position (35), and likewise, the minor axis in Figure 2 is at the 3 o'clock position (36). The maximum inclination of the teeth 30 of the flexspline 26 is found at the mid-point (37) between the major and minor axes 35 and 36.

The contact height (44) "h", is defined as the radial distance from the point of contact on the tooth 30 of the flexspline 26 to a point on the neutral plane 38 of the flexspline 26. The neutral plane 38 is a term describing an imaginary reference plane between the outside diameter (OD) and the inside diameter (ID) of the flexspline 26, (ignoring the teeth). It is a "neutral" plane because the circumferential length of the flexspline in that plane does not change during the distortion of the flexspline 26. The neutral plane follows the contour, i.e. oval deformation, of the flexspline.

The minimum "h" occurs when the teeth 30 and 32 are fully engaged, such as at the major axis 35, as shown in Figure 2.

Figure 3a shows the location of a zone of interference 39 in typical prior art tooth profiles.

In Figure 3b however, "h" is shown as the distance "44" from the point of contact 41 of the circular spline teeth 32 and the flexspline teeth 30, to the neutral plane 38.

The value of "h" varies from a minimum at a major axis 35 to a maximum at 37 at the onset of tooth engagement, as indicated in Figure 2, depending upon the geometry of the addendum height.

The contact height equation has the form:

$$h(\theta) = \text{harmonic component(s)} + \text{constant}$$

The harmonic component is due to the wave generator. Our equation for contact height is:

$$h(\theta) = d/4[1 - \cos(2\theta)] + k;$$

Where:

"$\theta$" is the rotation angle between the major axis of the wave generator and the centreline of a flexspline tooth under consideration;

"d" is the maximum amplitude of the deflection of the wave generator and is defined as the difference between the pitch diameters of the circular spline and the undeformed flexspline; and

"k" is the minimum value of contact height, which is a constant, and is the radial distance from the flexspline's neutral plane to its pitch diameter. This minimum value occurs when the tooth is located on the major axis (i.e. $\theta = 0$).

Tooth inclination, as shown in Figure 3b, results from the flexspline being deformed into an oval shape. The tooth inclination is zero at both the major and minor axis locations of the flexspline/wave generator, and reaches a maximum value at 37, or halfway between the major and minor axes.

We assume the flexspline tooth (centreline) remains perpendicular (normal) to the neutral plane 38. The angle by which the tooth inclines (46 in Figures 3a and 3b) can then be determined from the following trigonometric differential equation:

$$\tan\mu = 1/r \, dr/d\theta$$

Where:

"$\mu$" is the tooth inclination angle (46) in radians; and

"r" is the radius of the neutral plane of the deformed flexspline from the axis of rotation of the flexspline, at angle $\theta$.

For a typical case when the radius (r) of the flexspline is given by:

$$r = r_c + d/2(\cos(2\theta))$$

Where: "$r_c$" is the radius of the neutral plane of the undeformed flexspline from the axis of rotation of the flexspline. Solving for the tooth inclination angle gives:

$$\mu(\theta) = \text{ArcTan}\,[1/\{\,r_c + d/2\cos(2\theta)\}][-d\sin(2\theta)]$$

Substituting typical values for "d" and "$r_c$" in this equation we find that the maximum value of tooth inclination is in the range of 1 or 2 degrees.

When the tooth profile is described by:

$$X = d/8[2\theta - \sin(2\theta)]$$

$$Y = d/4[1 - \cos(2\theta)]$$

Inclination of the flexspline tooth will cause mechanical interference (39 in Figure 3a) with the adjacent circular spline tooth. The interference can be corrected by removing material from the tooth profile, in the tangential direction, of the amount of the arc segment "$h(\theta)\mu(\theta)$". In one specific embodiment, half of this amount is removed as by etching, machining or the like from the profiles of the teeth 30 of the flexspline 26 and the other half is removed from the profiles of the teeth 32 of the circular spline 28. Thus the new equations for tooth profile are:

$$X = d/8[2\theta - Sin(2\theta)] + 1/2[h(\theta)\mu(\theta)]$$

$$Y = d/4[\ 1-Cos(2\theta)]$$

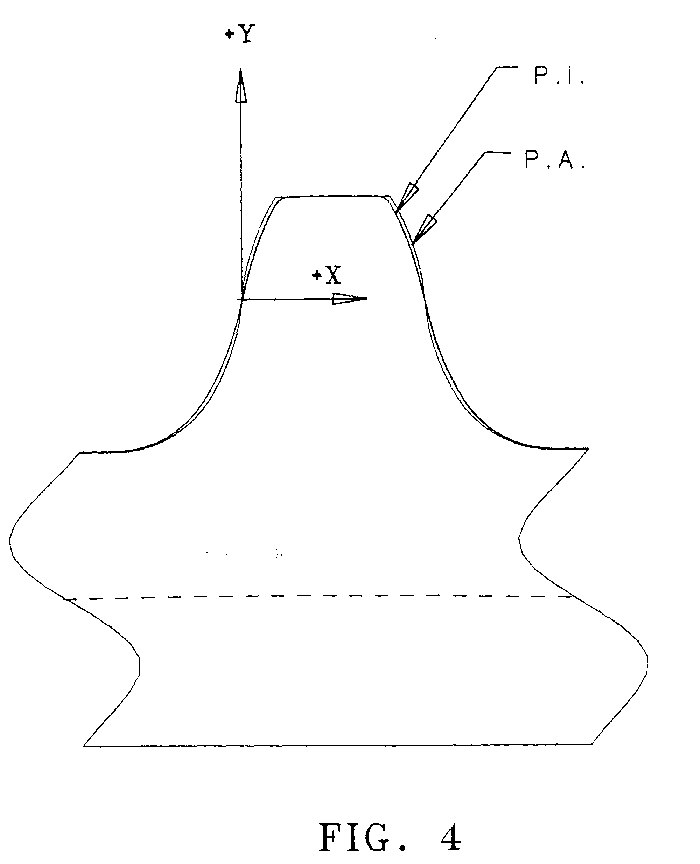

where X is the coordinate of the profile or curve in the tangential direction and Y is the coordinate of the profile or curve in the radial direction, of the tooth face or addendum, as shown in Figure 4. The tooth flank or dedendum, which is not in tooth-to-tooth contact except at precisely the major axis, is obtained by anti-symmetric reflection about the pitch circle diameter.

That is, the tooth profile is thus corrected to eliminate such interference. Such a corrected profile is shown in Figure 4, which shows the tooth profile embodying the present invention at P.I., compared with the tooth profile of the prior art at P.A.

It is to be noted that an oval wave generator is described for oval flexing of the flexspline to obtain a mesh between the internal and external gear teeth at two lobes. This type of harmonic drive speed reducer tooth profile arrangement embodying the present invention is also applicable to wave generators having more than two lobes, such as three or four.

Other modifications may be made without departing from the scope of the present invention as defined in the appended claims. For example although, in the embodiment given above, interference is corrected by removing half the unwanted material from profile regions of the flexspline teeth and the other half from the circular spline teeth, this is not essential. All of the unwanted material could be removed from the flexspline teeth, or from the circular spline teeth, or any other combination or ratio could be employed, although the sum of the amount of material removed from the flexspline and circular spline teeth should be equal or substantially equal to the arc length $\mu(\theta)$ x $h(\theta)$. Thus, a more general equation for the tooth profile would be:

$$X = d/8[2\theta - Sin\ (2\theta)] + \begin{cases} A_{FS} \text{ for the flexspline} \\ \qquad - or - \\ A_{CS} \text{ for the circular spline} \end{cases}$$

where

$$A_{FS} + A_{CS} = \mu(\theta) \times h(\theta)$$

Expressed in another way:

$$X(\text{flexspline}) = d/8[2\theta - Sin\ (2\theta)] + a\{\mu(\theta) \times h(\theta)\};$$

and

$$X(\text{circular spline}) = d/8[2\theta - Sin\ (2\theta)] + b\{\mu(\theta) \times h(\theta)\};$$

where a+b = 1.

## Claims

1. An extended contact harmonic drive gearing apparatus (10) for transmitting rotary motion from an input drive to an output drive, comprising:

a rigid circular spline (28) having gear teeth (32) thereon;

a flexible spline or flexspline (26) having gear teeth (30) thereon arranged radially adjacent said rigid circular spline (28);

a non-circular wave generator (12), having a major axis (35) and a minor axis (36), arranged radially adjacent said circular spline (28), and adapted to deform said flexspline (26) when the wave generator (12) is rotated relative to the flexspline, to generate a rotative motion between the flexspline (26) and the circular spline (28);

said flexspline (26), in conformance with said wave generator (12), having a minor axis (36) thereacross with maximum radial separation between said gear teeth (30, 32) of said flexspline (26) and said circular spline (28);

said flexspline (26), in conformance with said wave generator (12), having a major axis (35) thereacross with a maximum engagement between said gear teeth (30, 32) of said flexspline (26) and said circular spline (28);

said gear teeth (30) on said flexspline (26) having an inclination (46) which precesses from a norm and back again as the teeth pass from the minor axis to the major axis thereon with respect to the wave generator rotatively arranged therewithin; and

said gear teeth (30, 32) on said flexspline (26) and said circular spline (28) having tooth profiles which accommodate tooth inclination so as effectively to avoid interference therebetween;

characterised in that:

said flexspline and said circular spline gear teeth (30, 32) have tooth profiles which accommodate tooth inclination (46) of up to about 2 degrees; and

the tooth profiles of the flexspline and circular spline gear teeth (30, 32) include profile regions generally in accordance with the equations:

$$X = d/8[2\theta - \mathrm{Sin}\,(2\theta)] + \begin{cases} A_{FS} \text{ for the flexspline} \\ \qquad\qquad - \text{ or } - \\ A_{CS} \text{ for the circular spline} \end{cases}$$

and

$$Y = d/4\,[1 - \mathrm{Cos}(2\theta)];$$

where:

"X" and "Y"   are coordinates of the tooth profile regions in tangential and radial directions, respectively;

"d"   is the amplitude of the deflection of the wave generator and is defined as the difference between the pitch circle diameters of the circular spline and flexspline;

"$\theta$"   is the angle of rotation of the major axis of the wave generator relative to the centreline of a flexspline tooth under consideration;

"$(A_{FS} + A_{CS})$"   corresponds or substantially corresponds to the arc length $\{\mu(\theta) \times h(\theta)\}$;

"$\mu$"   is the radius of the deformed flexspline at angle $\theta$; and

"h"   is the radial distance from the point of contact of a flexspline tooth to a point on a neutral plane (38) between the outside and inside diameters of the flexspline (ignoring the teeth) where negligible change in circumferential length of the flexspline occurs during distortion thereof.

2. Apparatus as claimed in claim 1, wherein the tooth profiles of the teeth of the flexspline and circular spline include profile regions generally in accordance with the equation:

$$X = d/8\,[2\theta - \mathrm{Sin}\,(2\theta)] + 1/2\,\{\mu(\theta) \times h(\theta)\}.$$

3. A method of generating a tooth profile for an extended contact harmonic drive assembly having a wave generator (12), a flexible spline or flexspline (26) and a circular spline (28), which includes arranging tooth profiles (30, 32) on both said mating flexspline (26) and said circular spline (28) so as to permit effectively full engagement therebetween at a major axis (35) of interengagement, and no engagement between the teeth at a minor axis (36), and arranging said tooth profiles so as effectively to avoid interference between said flexspline and circular spline teeth (30, 32) at any point between said major axis and said minor axis by forming said tooth profiles to avoid that interference otherwise incurred due to the tooth inclination (46) at points between the major and minor axes (35, 36); characterised by:

fabricating said tooth profiles so as to allow the inclination (46) of up to 2 degrees for said teeth (30) precessing on said flexspline (26) as said wave generator (12) sweeps therepast; and
fabricating regions of the flexspline and circular spline tooth profiles so as to be generally in accordance with the equations:

$$X = d/8[2\theta - Sin(2\theta)] + \begin{cases} A_{FS} \text{ for the flexspline} \\ \quad\quad - \text{ or } - \\ A_{CS} \text{ for the circular spline} \end{cases}$$

and

$$Y = d/4 [1 - Cos(2\theta)];$$

where:

"X" and "Y"    are coordinates of the regions of the tooth profiles in tangential and radial directions respectively;

"d"    is the amplitude of the deflection of the wave generator and is defined as the difference between the pitch circle diameters of the circular spline and flexspline;

"$\theta$"    is the angle of rotation of the major axis of the wave generator relative to the centreline of a flexspline tooth under consideration;

"$(A_{FS} + A_{CS})$"    corresponds or substantially corresponds to the arc length $\{\mu(\theta) \times h(\theta)\}$;

"$\mu$"    is the radius of the deformed flexspline at angle $\theta$; and

"h"    is the radial distance from the point of contact of a flexspline tooth to a point on a neutral plane (38) between the outside and inside diameters of the flexspline (ignoring the teeth) where negligible change in circumferential length of the flexspline occurs during distortion thereof.

4. The method as claimed in claim 3, which includes fabricating regions of the flexspline and circular spline tooth profiles so as to be generally in accordance with the equation:

$$x = d/8 [2\theta - Sin (2\theta)] + 1/2 \{\mu(\theta) \times h(\theta)\}.$$

## Patentansprüche

1. Harmonische Antriebsübersetzungseinrichtung mit ausgedehntem Kontaktbereich (10) zur Übertragung einer rotativen Bewegung von einem Eingangsantrieb zu einem Ausgangsantrieb, umfassend:

einen starren, kreisförmigen Nutenring (28) mit Getriebezähnen (32) darauf;
einen flexiblen Nutenring oder Flexnutenring (26) mit Getriebezähnen (30) darauf, welcher radial benachbart dem starren, kreisförmigen Nutenring (28) angeordnet ist;
einen nicht-kreisförmigen Wellengenerator (12), der eine größere Achse (35) und eine kleinere Achse (36) hat, dem starren, kreisförmigen Nutenring (28) radial benachbart und dazu ausgebildet ist, den Flexnutenring (26) zu verformen, wenn der Wellengenerator (12) relativ zum Flexring gedreht wird, um so eine rotative Bewegung zwischen dem Flexnutenring (26) und dem kreisförmigen Nutenring (28) hervorzurufen;
wobei der Flexnutenring (26) in übereinstimmender Ausbildung mit dem Wellengenerator (12) eine kleinere Achse (36) darüber mit einer maximalen radialen Trennung zwischen den Getriebezähnen (30, 32) des Flexnutenringes (26) und des kreisförmigen Nutenringes (28) hat;

wobei der Flexnutenring (26) in übereinstimmender Ausbildung mit dem Wellengenerator (12) eine größere Achse darüber mit einem maximalen Eingriff zwischen den Getriebezähnen (30, 32) des Flexnutenringes (26) und des kreisförmigen Nutenringes (28) hat;

wobei die Getriebezähne (30) auf dem Flexnutenring (26) eine Neigung (46) haben, die von einer Norm und wieder zurück präzessieren, wenn die Zähne darauf in bezug auf den rotativ darin angeordneten Wellengenerator von der kleinen Achse zur größeren Achse gelangen; und

wobei die Getriebezähne (30, 32) auf dem Flexnutenring (26) und dem kreisförmigen Nutenring (28) Zahnprofile haben, die sich der Zahnneigung so wirksam als möglich anpassen, um eine nachteilige Beeinflussung dazwischen zu vermeiden;

dadurch gekennzeichnet, daß:

die Getriebezähne (30, 32) des Flexnutenringes und des kreisförmigen Nutenringes Zahnprofile haben, die sich einer Zahnneigung (46) von bis zu etwa 2 Grad anpassen; und daß

die Zahnprofile der Getriebezähne (30, 32) des Flexnutenringes und des kreisförmigen Nutenringes Profilbereiche enthalten, die im wesentlichen in Übereinstimmung mit den Gleichungen:

$$X = d/8[2\theta - \sin(2\theta)] + \begin{cases} A_{FS} \text{ für den Flexnutenring} \\ \quad - \text{ oder } - \\ A_{CS} \text{ für den kreisförmigen Nutenring} \end{cases}$$

und

$$Y = d/4 \, [1 - \cos(2\theta)]$$

sind;
wobei:

| | |
|---|---|
| "X" und "Y" | Koordinaten des Zahnprofilbereiches in tangentialer bzw. in radialer Richtung sind; |
| "d" | die Amplitude der Auslenkung des Wellengenerators und als Unterschied zwischen den Teilkreisdurchmessern des kreisförmigen Nutenringes und des Flexnutenringes definiert ist; |
| "$\theta$" | der Drehwinkel zwischen der größeren Achse auf dem Wellengenerator relativ zur Mittellinie eines betrachteten Flexnutenringzahnes ist; |
| "$(A_{FS} + A_{CS})$" | der Bogenlänge $\{\mu(\theta) \times h(\theta)\}$ korrespondiert oder im wesentlichen korrespondiert; |
| "$\mu$" | der Radius des deformierten Flexnutenringes beim Winkel 0 ist; und |
| "h" | der radiale Abstand zwischen dem Kontaktpunkt eines Flexnutenzahnes zu einem Punkt in einer neutralen Ebene (38) zwischen dem Außenseitendurchmesser und dem Innenseitendurchmesser des Flexnutenringes ist (die Zähne nicht beachtend), wobei eine vernachlässigbare Veränderung in der Umfangslänge des Flexnutenringes während dessen Auslenkung erfolgt. |

2. Einrichtung nach Anspruch 1, wobei die Zahnprofile jedes Zahnes auf dem Flexnutenring und dem kreisförmigen Nutenring Profilbereiche beinhalten, die im wesentlichen in Übereinstimmung mit der Formel:

$$X = d/8 \, [2\theta - \sin(2\theta)] + 1/2 \, \{\mu(\theta) \times h(\theta)\}$$

sind.

3. Verfahren zur Herstellung eines Zahnprofiles für eine harmonische Antriebsübersetzungseinrichtung mit einem Wellengenerator (12), einem flexiblen Nutenring oder Flexnutenring (26) und einem kreisförmigen Nutenring (28), welches das Anordnen von Zahnprofilen (30, 32) auf dem Flexnutenring (26) bzw. dem kreisförmigen Nutenring (28), die ineinander eingreifen, beinhaltet, derart, um das vollständige Eingreifen zwischen diesen auf einer größeren Achse (35) des gegenseitigen Eingriffs und keinen Eingriff zwischen den Zähnen auf einer kleineren Achse (36) wirksam zu gestatten, und das Anordnen der Zahnprofile derart einschließt, um eine nachteilige Beeinflussung zwischen den Zähnen (30, 32) des Flexnutenringes und des kreisförmigen Nutenringes auf jedem beliebigen Punkt zwischen der größeren Achse und der kleineren Achse durch die Ausformung der Zahnprofile wirksam zu vermeiden, um eine sonst aufgrund der Zahnneigung (46) an Punkten zwischen den größeren und kleineren Achsen (35, 36) auftretende nachteilige Beeinflussung zu vermeiden;

dadurch gekennzeichnet, daß:

die Zahnprofile derart hergestellt werden, daß sie Neigungen (46) von bis zu etwa 2 Grad für die auf dem Flexnutenring (26), wenn der Wellengenerator (12) daran vorbeistreicht, präzessierenden Zähne (30) erlauben; und

daß Bereiche auf den Zahnprofilen des Flexnutenringes und des kreisförmigen Nutenringes hergestellt werden, die im wesentlichen in Übereinstimmung mit den Gleichungen:

$$X = d/8[2\theta - \sin(2\theta)] + \begin{cases} A_{FS} \text{ für den Flexnutenring} \\ \text{- oder -} \\ A_{CS} \text{ für den kreisförmigen Nutenring} \end{cases}$$

und

$$Y = d/4 [1 - \cos(2\theta)]$$

sind;
wobei:

"X" und "Y"  Koordinaten des Zahnprofilbereiches in tangentialer bzw. in radialer Richtung sind;
"d"  die Amplitude der Auslenkung des Wellengenerators und als Unterschied zwischen den Teilkreisdurchmessern des kreisförmigen Nutenringes und des Flexnutenringes definiert ist;
"$\theta$"  der Drehwinkel zwischen der größeren Achse auf dem Wellengenerator relativ zur Mittellinie eines betrachteten Flexnutenringzahnes ist;
"$(A_{FS} + A_{CS})$"  der Bogenlänge $\{\mu(\theta) \times h(\theta)\}$ korrespondiert oder im wesentlichen korrespondiert;
"$\mu$"  der Radius des deformierten Flexnutenringes beim Winkel 0 ist; und
"h"  der radiale Abstand zwischen dem Kontaktpunkt eines Flexnutenzahnes zu einem Punkt in einer neutralen Ebene (38) zwischen dem Außenseitendurchmesser und dem Innenseitendurchmesser des Flexnutenringes ist (die Zähne nicht beachtend), wobei eine vernachlässigbare Veränderung in der Umfangslänge des Flexnutenringes während dessen Auslenkung erfolgt.

4. Verfahren nach Anspruch 3, welches die Herstellung von Bereichen auf den Zahnprofilen des Flexnutenringes und des kreisförmigen Nutenringes beinhaltet, die im wesentlichen in Übereinstimmung mit der Formel:

$$X = d/8 [2\theta - \sin(2\theta)] + 1/2 \{\mu(\theta) \times h(\theta)\} \text{ sind.}$$

**Revendications**

1. Appareil à engrenages d'entraînement harmonique par contact étendu(10) pour transmettre un mouvement rotatif depuis un mécanisme d'entraînement d'entrée à un mécanisme d'entraînement de sortie, comprenant :

une pièce cannelée circulaire rigide (28) présentant des dents d'engrenage (32) ;
une pièce cannelée souple (26) présentant des dents d'engrenage (30), agencée radialement adjacente à ladite pièce cannelée circulaire rigide (28) ;

un générateur d'ondes non circulaire (12) ayant un axe principal (35) et un axe secondaire (36), agencé radialement adjacent à ladite pièce cannelée circulaire (28), et adapté pour déformer ladite pièce cannelée souple (26) quand le générateur d'ondes (12) est mis en rotation par rapport à la pièce cannelée souple, pour produire un mouvement rotatif entre la pièce cannelée souple (26) et la pièce cannelée circulaire (28) ;

ladite pièce cannelée souple (26), en conformité avec ledit générateur d'ondes (12), ayant un axe secondaire (36) en travers avec une séparation radiale maximale entre lesdites dents d'engrenage (30, 32) de ladite pièce cannelée souple (26) et ladite pièce cannelée circulaire (28) ;

ladite pièce cannelée souple (26), en conformité avec ledit générateur d'ondes (12) ayant un axe principal (35) en travers avec une coopération maximale avec lesdites dents d'engrenage (30, 32) de ladite pièce cannelée souple (36) et ladite pièce cannelée circulaire (28) ;

lesdites dents d'engrenage (30) sur ladite pièce cannelée souple (26) ayant une inclinaison (46) présentant une précession autour d'une référence lorsque les dents passent depuis l'axe secondaire à l'axe principal dessus par rapport au générateur d'ondes agencé de manière à pouvoir tourner à l'intérieur, et lesdites dents d'engrenage (30, 32) sur ladite pièce cannelée souple (26) et ladite pièce cannelée circulaire (28) ont des profils de dents qui adaptent l'inclinaison de dent de manière à effectivement éviter les interférences entre elles ;

caractérisé en ce que :

les dents d'engrenage (30, 32) de ladite pièce cannelée souple et de ladite pièce cannelée circulaire ont des profils de dents (30, 32) qui adaptent l'inclinaison (46) de dents jusqu'à environ 2 degrés ; et

les profils de dents d'engrenage (30, 32) de la pièce cannelée souple et de la pièce cannelée circulaire incluent des régions de profil généralement conforme aux équations :

$$x = d/8\,[2\theta - \mathrm{Sin}\,(2\theta)] + \begin{cases} A_{FS} \text{ pour la pièce cannelée souple} \\ \text{- ou -} \\ A_{CS} \text{ pour la pièce cannelée circulaire} \end{cases}$$

et

$$Y = d/4\,[1-\mathrm{Cos}(2\theta)]$$

où :

"X" et "Y" sont des coordonnées des régions de profils de dents dans les directions tangentielle et radiale respectivement ;

"d" est l'amplitude du déplacement du générateur d'ondes et est définie comme la différence entre les diamètres de cercles primitifs de la pièce cannelée circulaire et de la pièce cannelée souple,

"$\theta$" est l'angle de rotation de l'axe principal du générateur d'ondes par rapport à l'axe médian d'une dent de la pièce cannelée souple considéré,

"$(A_{FS} + A_{CS})$" correspond ou correspond sensiblement à la longueur d'arc $\{\mu(\theta) \times h(\theta)\}$ ;

"$\mu$" est le rayon de la pièce cannelée souple déformée à l'angle $\theta$ ; et

"h" est la distance radiale depuis le point de contact de la dent de pièce cannelée souple à un point sur le plan neutre (38) entre les diamètres intérieur et extérieur de la pièce cannelée souple (en ignorant les dents) où un changement négligeable en longueur circonférentielle de la pièce cannelée souple apparaît pendant sa déformation.

2. Appareil selon la revendication 1, dans lequel les profils de dents des dents de la pièce cannelée souple et de la pièce cannelée circulaire comprennent des régions de profils généralement conformes à l'équation :

$$x = d/8 \, [2\theta - \text{Sin} \, (2\theta)] + \frac{1}{2} \{\mu(\theta) \times h(\theta)\}$$

3. Procédé pour produire un profil de dents pour un assemblage d'entraînement harmonique par contact comprenant un générateur d'ondes (12), une pièce cannelée souple (26) et une pièce cannelée circulaire (28), qui comprend l'ajustement des profils (30, 32) de dents sur à la fois ladite pièce cannelée souple d'accouplement (26) et ladite pièce cannelée circulaire (28) de manière à permettre effectivement une coopération complète entre elles au niveau d'un axe principal (35) de coopération entre elles, et une absence de coopération entre les dents au niveau d'un axe secondaire (36), et l'ajustement desdits profils de dents de manière à éviter effectivement une interférence entre les dents (30, 32) de ladite pièce cannelée souple et de ladite pièce cannelée circulaire au niveau d'un point quelconque entre ledit axe principal et ledit axe secondaire en formant lesdits profils de dents pour éviter cette interférence autrement encourue du fait de l'inclinaison (46) de dent au niveau de points entre les axes principal et secondaire (35, 36)
caractérisé par :

la fabrication desdits profils de dents de manière à permettre une inclinaison (46) jusqu'à 2 degrés pour lesdites dents (30) en précession sur ladite pièce cannelée souple (26) lorsque ledit générateur d'ondes (12) ondule devant celle-ci ; et
la fabrication de régions de profil de dents de la pièce cannelée souple et de la pièce cannelée circulaire de manière à être conforme aux équations :

$$x = d/8[2\theta - \text{Sin} \, (2\theta)] + \begin{cases} A_{FS} \text{ pour la pièce cannelée souple} \\ \quad \text{- ou -} \\ A_{CS} \text{ pour la pièce cannelée circulaire} \end{cases}$$

et

$$Y = d/4 \, [1 - \text{Cos}(2\theta)]$$

où :

"X" et "Y" sont des coordonnées des régions de profils de dents dans les directions tangentielle et radiale respectivement ;
"d" est l'amplitude du déplacement du générateur d'ondes et est définie comme la différence entre les diamètres de cercle primitif de la pièce cannelée circulaire et de la pièce cannelée souple,
"θ" est l'angle de rotation de l'axe principal du générateur d'ondes par rapport à l'axe médian d'une dent de la pièce cannelée souple considéré,
"$(A_{FS} + A_{CS})$" correspond ou correspond sensiblement à la longueur d'arc $\{\mu(\theta) \times h(\theta)\}$ ;
"μ" est le rayon de la pièce cannelée souple déformée d'angle θ ; et
"h" est la distance radiale depuis le point de contact de la dent de pièce cannelée souple à un point sur le plan neutre (38) entre les diamètres intérieur et extérieur de la pièce cannelée souple (en ignorant les dents) où un changement négligeable en longueur circonférentielle de la pièce cannelée souple apparaît pendant sa déformation.

4. Procédé selon la revendication 3, qui inclut la fabrication de régions des profils de dent de la pièce cannelée souple et de la pièce cannelée circulaire de manière généralement conforme à l'équation :

$$x = d/8 \, [2\theta - \mathrm{Sin}\,(2\theta)] + \tfrac{1}{2} \, \{\mu(\theta) \times h(\theta)\}.$$

FIG. 1

FIG. 2

FIG. 3a

28

46

38

32

41

30

44

26

FIG. 3b

FIG. 3c

FIG. 4